# EUROPEAN PATENT APPLICATION

(11) **EP 3 257 908 A1**
(43) Date of publication of application: **20.12.2017**
(21) Application number: 16748765.1
(22) Date of filing: 10.02.2016
(51) Int. Cl.: C09D 11/50, B65D 25/34, B65D 81/24

(54) **SMART CONTAINER FOR FOOD AND FLUIDS**

(30) Priority: 12.02.2015 ES 201530156 U
(71) Applicant: Merino Ciudad, Jesus, 03610 Petrer (Alicante) (ES)
(72) Inventor: Merino Ciudad, Jesus, 03610 Petrer (Alicante) (ES)
(74) Representative: De Pablos Riba, Juan Ramon
(86) International application number: PCT/ES2016/000020
(87) International publication number: WO 2016/128594

(57) **Abstract**

The invention relates to a smart container for food and fluids, which can take any shape, serving as a packaging for the commercialisation of food and liquids, consisting for example in a vase or a bottle, which incorporates, on the outer surface thereof (1a), an indivisible microencapsulation (3) of printed plastic supports combined with thermochromic inks that react to temperature. The encapsulation (3) can include forms, figures and/or alphanumeric signs, and can cover all or part of the outer surface (1a) of the container. The thermochromic inks react to cold and to heat, over a range of temperatures from 0° to 70°, exhibiting a colour-change sensitivity oscillating between 3° and 6 °C.

## Description

### OBJECT OF THE INVENTION

The invention, as expressed in the present specification, relates to a container for food and fluids, which has a number of advantages and characteristics of novelty, which will be described in detail below, which suppose a remarkable improvement of the current state of the art.

More particularly, the object of the invention is focused on a container of plastic material to contain food and fluids which, serving as a packaging for commercialization and / or as a container for its consumption, has the particularity of incorporating in its exterior a micro-indivisible encapsulation of plastic supports printed in full colour in combination of thermo-chromatic and indivisible inks that react to the temperature to indicate, by means of colour changes, when the product contained in its interior is in its optimal conditions for its use or consumption.

### FIELD OF APPLICATION OF THE INVENTION

The field of application of the present invention forms part of the industry sector for the manufacture of plastic containers and containers.

### BACKGROUND OF THE INVENTION

As a reference to the current state of the art, it should be noted that, although various products incorporating thermo-chromatic ink are known on the market, at least the applicant is not aware of the existence of any that has technical, structural and constitutive characteristics similar to those in particular in the container for food and fluids herein advocated and as claimed, the distinguishing features of which are set forth in the appended claims which accompany the present specification.

### EXPLANATION OF THE INVENTION

Specifically, what the invention proposes, as pointed out above, is a container for all types of food and fluids, which is distinguished by being able to indicate, by means of colour changes, when the product contained in its interior is in its optimal conditions for its use or consumption.

For this purpose, the container, which is made of plastic injection materials, has a built-in micro-encapsulation of plastic supports printed in full colour on its outer surface in combination with thermo-chromatic inks that react to temperature.

Once the desired temperature is reached or exceeds the desired value, the colour appears or disappears, according to the temperature range in which it has been worked.

This type of printing with thermo-chromatic ink has a temperature range from 0ºC to 70ºC. The sensitivity for the colour change can vary between 3º and 6º C.

The inks used are both cold and heat reactants, depending on the type of ink used, ink hidden, ie transparent and not visible while not reacting, or reversible ink, which changes colour when reacted.

The applications of this container can be of industrial type, pharmaceutical use and advertising or promotional use. Thus, a possible application allows it to verify that the food contained in the container is suitable or at the ideal temperature to be consumed or to guarantee its optimal state of evaluation.

A thermo-chromatic container with the thermo-chromatic ink expected to react at a temperature of about 43 ° C, should begin to change colour to about 40 ° C and run out of colour at 43 ° C, so it tells us when the temperature drops, this utilization serves, for example, as an indicator of caution for hot drinks not to burn when sipping them.

A thermo-chromatic container with the thermo-chromatic ink expected to react at a temperature of 20 ° C, for example, begins to change colour when they reach about 18 ° C and at 20 ° C is no longer colour, therefore it can indicate a temperature and its serious use as an indicator of a cold drink.

The described container for food and fluids represents, therefore, an innovation of structural and constitutive characteristics unknown until now, reasons that together with its practical utility, provide it with sufficient basis to obtain the privilege of exclusivity that is requested.

### DESCRIPTION OF THE DRAWINGS

In order to complement the description that is being made and in order to help a better understanding of the characteristics of the invention, a description is attached, as an integral part thereof, of a drawing, in which, for illustrative purposes and not limiting the following:

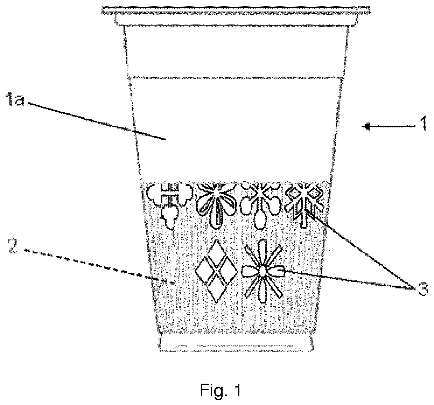

Figure 1 shows a perspective view of an embodiment of the container for food and fluids, object of the invention, which has been represented partially filled with liquid whose temperature reacts the thermo-chromatic ink that it incorporates on its surface.

### PREFERRED EMBODIMENT OF THE INVENTION

In view of said single figure 1, and in accordance with the numbering adopted, a preferred, but not limiting, example of the recommended food and fluid container can be observed therein, which comprises what is indicated and described in detail below.

Thus, as seen in said figure, the container (1), which may have any shape, shape or size and serve as a packaging for the marketing of beverages, foodstuffs or liquid products (2), and / or container for consumption, consisting for example of a vessel as shown in the figure, or in a bottle, has the particularity of having, on its outer surface (1a), an indivisible micro-encapsulation (3) of printed plastic supports in combination with thermo-chromatic inks that react to temperature.

Said encapsulation (3) may take different shapes, figures and / or alphanumeric signs as well as totally or partially covering said outer surface (1a) of the container, as appropriate in each case and has the particularity of being indivisible from the container itself

The thermo-chromatic inks used are both cold and heat reactants, which may be hidden ink, that is to say it is transparent and can not be seen while it is not reacting, and / or reversible ink, which changes colour to react.

In addition, the thermo-chromatic ink used is of the type that reacts in a temperature range from 0 ° C to 70 ° C, having a sensitivity for the 10 colour change that oscillates between 3 ° and 6 ° C.

The nature of the invention and the manner of its implementation are sufficiently described, it is not considered necessary to extend its explanation so that any expert in the subject can understand its scope and the advantages derived therefrom, within its essentiality, may be implemented in other forms of implementation which differ in detail from that indicated by way of example, and to which it will also attain the protection provided that its fundamental principle is not altered, changed or modified .

## Claims

1. FOOD AND FLUID CONTAINER which, in any configuration, shape or size and serving as a packaging for the marketing of beverages, foodstuffs or liquid products (2), and / or as a container for their consumption, is **characterized in that** has on its outer surface (1a), an indivisible micro-encapsulation (3) of plastic supports printed in combination with thermochromic inks which react to temperature, adopting different shapes, figures and / or alphanumeric signs.

2. A food and fluid container according to claim 1, **characterized in that** the indivisible encapsulation (3) of plastic supports printed in combination with temperature-reactive thermochromic inks completely covers the outer surface (1a) of the container.

3. A food container according to claim 1, **characterized in that** the indivisible encapsulation (3) of plastic supports printed in combination with thermochromic inks which react at temperature, only partially covers the outer surface (1a) of the container.

4. A FOOD AND FLUID CONTAINER according to any one of claims 1-3, **characterized in that** the thermo-chromatic inks used are both cold and heat reactants

5. A food and fluid container according to any one of claims 1-4, **characterized in that** the thermo-chromatic inks used are of hidden ink, ie it is transparent and is not visible until it reacts.

6. A food and fluid container according to any one of claims 1-5, **characterized in that** the thermochromic inks used are of reversible ink, which changes colour upon reaction.

7. A food and fluid container according to any of claims 1-6, **characterized in that** the thermo-chromatic inks used react in a temperature range from 0 ° C to 70 ° C

8. A FOOD AND FLUID CONTAINER according to claim 7, **characterized in that** the thermochromic inks used have a sensitivity for colour change ranging from 3 ° to 6 ° C.
